# EUROPEAN PATENT APPLICATION

(11) **EP 4 738 559 A1**
(43) Date of publication of application: **06.05.2026**
(21) Application number: 24886376.3
(22) Date of filing: 01.11.2024
(51) Int. Cl.: H01M 50/183, H01M 50/105, H01M 50/502, H01M 50/249

(54) **BATTERY MODULE, BATTERY PACK AND VEHICLE INCLUDING SAME**

(30) Priority: 03.11.2023 KR 20230151093; 05.08.2024 KR 20240104118; 31.10.2024 KR 20240152848
(71) Applicant: LG Energy Solution, Ltd., Seoul 07335 (KR)
(72) Inventor: PARK, Gi-Chan, Daejeon 34122 (KR); KIM, Soo-Youl, Daejeon 34122 (KR); CHANG, Hyuk-Kyun, Daejeon 34122 (KR); JUNG, Hye-Mi, Daejeon 34122 (KR)
(74) Representative: Plasseraud IP
(86) International application number: PCT/KR2024/017094
(87) International publication number: WO 2025/095706

(57) **Abstract**

The present disclosure may provide a battery module including a plurality of battery cells having a storage portion and a sealing portion, respectively, and configured to be stacked on each other, a module case configured to store the plurality of battery cells in an inner space, a bus-bar assembly located on a side of a terrace portion where an electrode lead is located, among the sealing portions of the battery cells, and electrically connected to the electrode lead, and a pressing member coupled to the bus-bar assembly and configured to pressurize the terrace portion when internal pressure of the battery cell increases.

## Description

### TECHNICAL FIELD

The present disclosure relates to a battery module, and a battery pack and a vehicle including the same.

This application is based on and claims priority from Korean Patent Application No. 10-2023-0151093, filed on November 03, 2023, with the Korean Intellectual Property Office, the disclosure of which is incorporated herein in its entirety by reference.

This application is based on and claims priority from Korean Patent Application No. 10-2024-0104118, filed on August 05, 2024, with the Korean Intellectual Property Office, the disclosure of which is incorporated herein in its entirety by reference.

This application is based on and claims priority from Korean Patent Application No. 10-2024-0152848, filed on October 31, 2024, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices.

These secondary batteries are attracting attention as a new energy source for improving eco-friendliness and energy efficiency because of the primary advantage of dramatically reducing the use of fossil fuels and another advantage of not generating byproducts resulting from energy use.

Secondary batteries currently widely used include lithium-ion batteries, lithium-polymer batteries, nickel-cadmium batteries, nickel-hydrogen batteries, nickel-zinc batteries, and the like. When a higher output voltage is required, a battery module or battery pack may be configured by connecting a plurality of battery cells in series. In addition, a battery module or battery pack may be configured by connecting multiple battery cells in parallel in order to increase the charge/discharge capacity. Accordingly, the number of battery cells included in the battery module or pack may be set in various ways depending on the required output voltage or charge/discharge capacity.

Meanwhile, since the battery cells undergo chemical reactions during charging and discharging, their performance may deteriorate if they are used at a temperature higher than an appropriate temperature, and if the temperature is not controlled to the appropriate temperature, unexpected ignition or explosion is likely to occur. In addition, the battery module has a structure in which the battery cells are densely stored inside a module frame. Therefore, if a thermal event occurs in any battery cell, high-temperature gas and flames emitted therefrom may spread to adjacent battery cells, causing a chain reaction of explosion in the battery cells, which is very dangerous.

In particular, if the battery module contains multiple battery cells, the high-temperature gas, flames, or sparks generated during thermal runaway in a specific battery cell are likely to erupt to the front and rear of the battery cells where the electrode leads of the battery module are located. As a result, the components located at both ends of the battery module, such as end plates or parts of a bus-bar frame, may be damaged by heat, which may bring about structural collapse.

In addition, the flames emitted to the outside through the end plates may cause thermal propagation to adjacent battery modules. In particular, if flame or the like generated from a specific battery module spreads to the end plate of another battery module, there is a high risk of thermal propagation or chain ignition between modules. This may cause the thermal runaway to spread to the entire battery pack including multiple battery modules.

Therefore, there is a need to develop a structure capable of preventing the discharge of high-temperature gas or flame emitted from a battery cell where a thermal event occurs or appropriately controlling the discharge direction, thereby delaying thermal runaway between the battery cells or battery modules.

### DISCLOSURE

### Technical Problem

The present disclosure is designed to solve the problems of the related art, and therefore the present disclosure is directed to providing a battery module with improved safety and reliability by appropriately controlling the venting direction of high-temperature gas or flames generated from a battery cell in the event of an abnormal situation of the battery module, thereby effectively preventing thermal propagation between battery cells or battery modules.

The present disclosure is also to provide a battery pack including a battery module with an improved structure, and a vehicle including the battery pack.

The technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery module including a plurality of battery cells having a storage portion and a sealing portion, respectively, and configured to be stacked on each other, a module case configured to store the plurality of battery cells in an inner space, a bus-bar assembly located on a side of a terrace portion where an electrode lead is located, among the sealing portions of the battery cells, and electrically connected to the electrode lead, and a pressing member coupled to the bus-bar assembly and configured to pressurize the terrace portion when internal pressure of the battery cell increases.

The pressing member may be configured to be inserted into spaces between at least some of the plurality of battery cells.

The bus-bar assembly may include a bus-bar terminal and a bus-bar frame, and the pressing member may be located on the inner side of the bus-bar frame, and the bus-bar terminal may be located on the outer side of the bus-bar frame.

The pressing member and the bus-bar assembly may be stored in the module case while being coupled to each other.

Adjacent pressing members may be configured to pressurize the terrace portion of the battery cell from both sides.

The pressing member may be configured to pressurize the storage portion of the battery cell inward.

A horizontal length of the pressing member may be configured to be equal to or greater than a distance between the bus-bar assembly and the battery cell.

The pressing member may be configured to be deformed in shape by the storage portion of the battery cell during assembly.

A shape of the pressing member may be formed to match a shape of an empty space between the bus-bar assembly and the battery cell.

The pressing member may include an elastic body.

The pressing member may include two or more different materials.

The pressing member may include two or more materials with different strengths from each other.

The pressing member may include an insulating or heat-resistant material.

The pressing member may be disposed to be surrounded by the bus-bar assembly, the storage portion, and the sealing portion.

A vertical height of the pressing member may be greater than a vertical height of the battery cell.

A vertical height of the pressing member may be configured to be greater than a distance between an upper plate and a lower plate of the module case, and the pressing member may be configured to be pressurized in a vertical direction by the upper plate and the lower plate.

According to another aspect of the present disclosure, there is provided a battery pack including a battery according to the present disclosure.

According to another aspect of the present disclosure, there is provided a vehicle including a battery pack according to the present disclosure.

### Advantageous Effects

According to one aspect of the present disclosure, when an abnormal situation such as thermal runaway occurs in a battery cell, it is possible to prevent or suppress the discharge of venting gas or flames toward the terrace portion. In particular, the space near the terrace portion of the battery cell may be relatively wide in the inner space of the battery module. However, according to the above aspect, since venting gas or flames are not discharged from the battery cell where a thermal event has occurred toward the terrace portion, it is possible to suppress or block propagation of thermal runaway due to the venting gas or flames to other battery cells through the space near the terrace portion.

In particular, according to an embodiment of the present disclosure, even if the internal pressure of the battery cell increases, the fused (sealed) portion of the sealing portion may be prevented from being opened by the pressing member, thereby preventing the seal breakdown of the sealing portion. Therefore, it is possible to prevent high-temperature gas or flames from being discharged to the components positioned adjacent to the terrace portion, in particular, electrical components such as a bus-bar assembly or a module terminal disposed on the outer side thereof. Therefore, it is possible to prevent damage to various components located in the corresponding direction, and to prevent unintentional interruption of electrical connections between the battery cells or battery modules.

According to another aspect of the present disclosure, directional venting for discharging venting gas or the like in an intended direction may be more easily implemented. For example, according to an embodiment of the present disclosure, gas or flame may be discharged to the top of the battery cell or battery module. In this case, the safety and reliability of the battery module including multiple battery cells may be further improved.

In addition, according to another aspect of the present disclosure, the pressing member may be configured to be coupled to a bus-bar assembly, thereby facilitating the assembly of the pressing member and simplifying the manufacturing process.

In addition, according to another aspect of the present disclosure, it is possible to prevent other battery modules from being thermally damaged by high-temperature gas or flame generated from a specific battery module. In particular, according to this aspect of the present disclosure, propagation of thermal runaway between modules may be effectively prevented or delayed.

Therefore, it is possible to prevent or delay events due to thermal runaway in a battery pack including multiple battery modules or a device equipped with the same, such as fire or explosion.

In particular, in the case of electric vehicles, suppressing or delaying propagation of thermal runaway between the battery cells or battery modules may secure sufficient time for occupants to escape or drive.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a perspective view schematically illustrating the configuration of a battery module according to an embodiment of the present disclosure.
FIG. 2 is a partially exploded perspective view illustrating the battery module in FIG. 1.
FIG. 3 is a perspective view schematically illustrating the configuration of a battery cell included in a battery module according to an embodiment of the present disclosure.
FIG. 4a is a perspective view illustrating the state where a bus-bar assembly and a pressing member of a battery module are coupled according to an embodiment of the present disclosure.
FIG. 4b is a cross-sectional view illustrating the state where a bus-bar assembly and a pressing member of a battery module are coupled when view from above according to an embodiment of the present disclosure.
FIG. 5 is a cross-sectional view illustrating a process in which a bus-bar assembly and a pressing member of a battery module are coupled to a battery cell according to an embodiment of the present disclosure.
FIG. 6 is a perspective view illustrating the state where a bus-bar assembly and a pressing member are coupled to a battery cell according to an embodiment of the present disclosure.
FIG. 7a is a cross-sectional view illustrating the state where a bus-bar assembly and a pressing member are coupled to a battery cell according to an embodiment of the present disclosure.
FIG. 7b is a cross-sectional view illustrating the state where a bus-bar assembly and a pressing member are coupled to a battery cell according to an embodiment of the present disclosure.
FIG. 8 is a perspective view illustrating the state where a bus-bar assembly and a pressing member are coupled to a battery cell on the front side of a battery module according to another embodiment of the present disclosure.
FIG. 9 is a cross-sectional view illustrating the state where a bus-bar assembly and a pressing member are coupled to a battery cell on the front side of a battery module according to another embodiment of the present disclosure.
FIG. 10 is a cross-sectional view illustrating the state where a bus-bar assembly and a pressing member are coupled to a battery cell according to an embodiment of the present disclosure.
FIG. 11 is a cross-sectional view illustrating the state where a bus-bar assembly, a pressing member, and a battery cell are coupled according to another embodiment of the present disclosure.
FIG. 12 is a cross-sectional view illustrating the state where a bus-bar assembly, a pressing member, and a battery cell are coupled according to another embodiment of the present disclosure.
FIG. 13 is a cross-sectional view schematically illustrating a partial configuration of a battery module including a pressing member according to another embodiment of the present disclosure.
FIG. 14 is a cross-sectional view schematically illustrating a partial configuration of a battery module including a pressing member according to another embodiment of the present disclosure.
FIG. 15 is a cross-sectional view of a battery module according to an embodiment of the present disclosure.
FIG. 16 is a cross-sectional view of a battery module according to another embodiment of the present disclosure.
FIG. 17 is a cross-sectional view of a battery module according to another embodiment of the present disclosure.
FIG. 18 is an exploded perspective view schematically illustrating a battery pack including a battery module according to an embodiment of the present disclosure.
FIG. 19 is a perspective view schematically illustrating the configuration of a battery pack according to another embodiment of the present disclosure.
FIG. 20 is a schematically perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

In addition, the present disclosure may include various embodiments. Redundant descriptions of substantially the same or similar configurations will be omitted from respective embodiments, and a description will be made based on differences therebetween.

The sizes of some elements shown in the attached drawings may be exaggerated, instead of reflecting their actual sizes, for convenience of explanation and clarification. In addition, the same reference numerals may be assigned to the same elements among the embodiments.

Although "first," "second," etc. are used to describe various elements, these elements are not limited to these terms. These terms are only used to distinguish one element from another element, and unless otherwise stated, a first element may also be a second element.

Throughout the specification, unless otherwise stated, respective elements may include a single or a plurality of elements.

Configuration in which an element is disposed "in the upper portion (or lower portion)" or "at the top (or bottom)" of a target element may indicate that the element may be positioned in contact with the upper surface (or lower surface) of the target element and that another element may be interposed between the target element and the element disposed at the top (or bottom) of the target element.

Additionally, the expression "an element is 'connected', 'coupled', or 'fastened' to another element" should be understood that the elements may be directly connected, coupled, or fastened to each other, and that another element may be "interposed" between the elements, or that the elements may be "connected", "coupled", or "fastened" through another element.

A single element herein should be construed to encompass a plurality of elements. In this specification, the expression "an element 'is configured as' or 'includes' other elements or steps" should be understood that the element may exclude some other elements or steps and that the element may further include additional elements or steps.

Throughout the specification, "A and/or B", unless otherwise stated, may denote A or B, or A and B.

Meanwhile, in the embodiment of the present disclosure, the X-axis direction, unless otherwise specified, in which a plurality of battery cells 100 are stacked will be referred to as a left-right direction, the Y-axis direction, which is a horizontal direction orthogonal to the cell stacking direction, will be referred to as a front-back direction, and the Z-axis direction orthogonal to the X-Y plane will be referred to as an up-down direction (vertical direction). Furthermore, the Y-axis direction may also be referred to as a longitudinal direction of the cell in the case of a pouch-type cell. In addition, the left-right direction, the front-back direction, and the up-down direction may also be expressed as a first direction, a second direction, and a third direction, respectively.

Meanwhile, although terms indicating directions such as up, down, left, right, front, and back directions are used in this specification, it is obvious to those skilled in the art to which the present disclosure pertains that these terms are only for convenience of explanation and may vary depending on the position of the target object or the position of the observer.

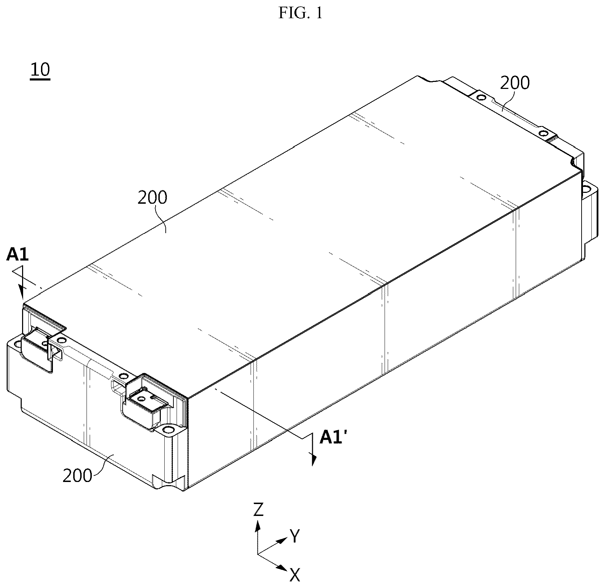

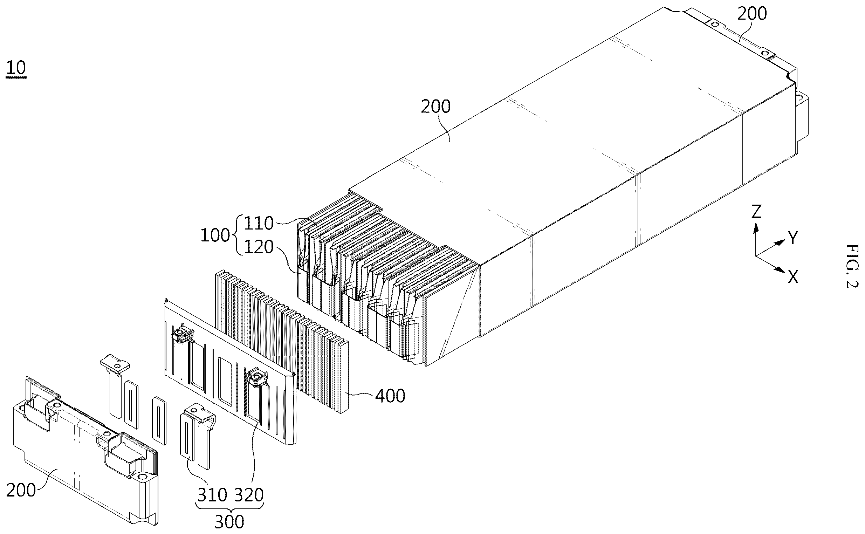

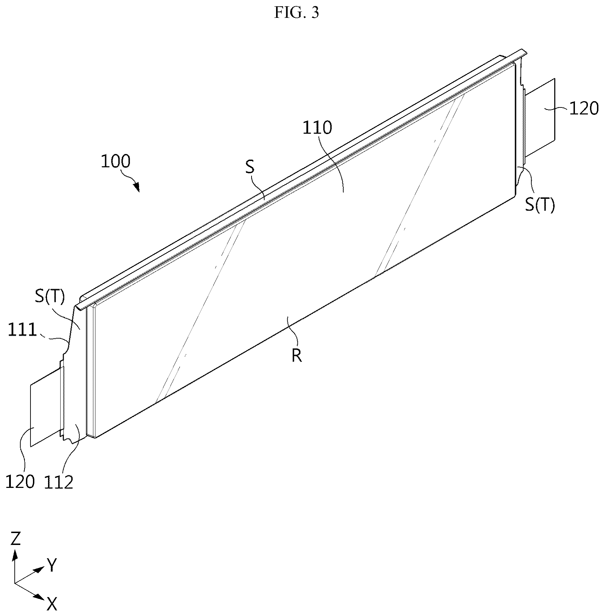

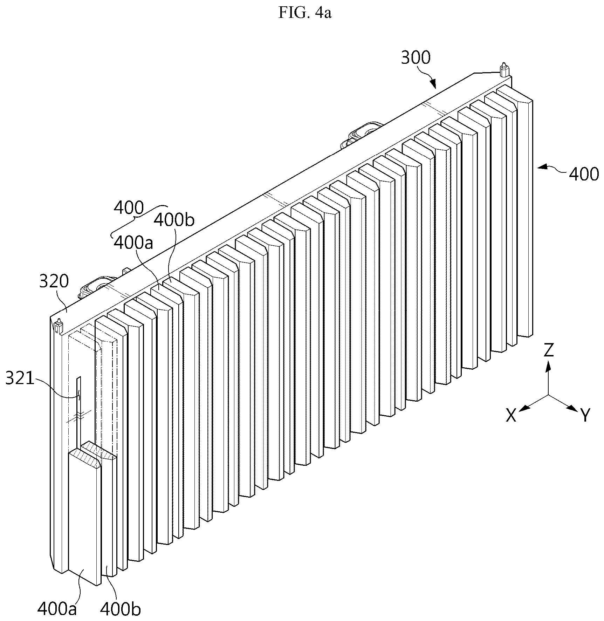

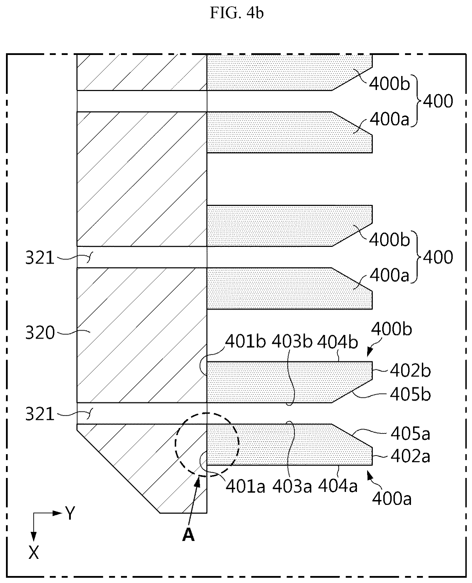

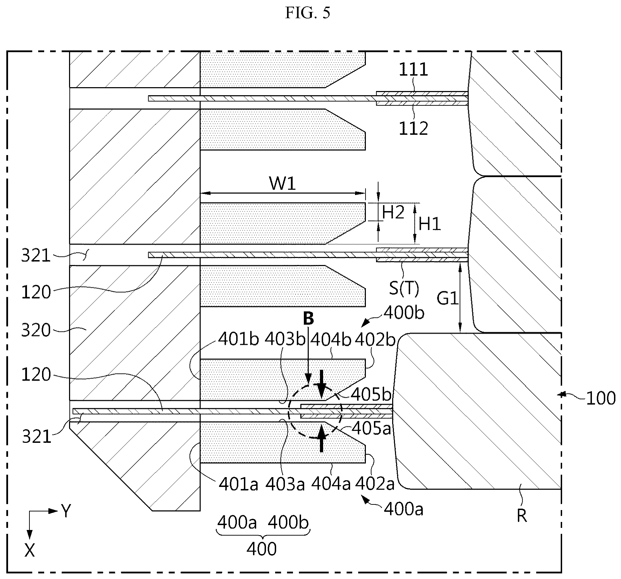

FIG. 1 is a perspective view schematically illustrating the configuration of a battery module 10 according to an embodiment of the present disclosure. FIG. 2 is a partially exploded perspective view illustrating the battery module in FIG. 1. FIG. 3 is a perspective view schematically illustrating the configuration of a battery cell 100 included in a battery module 10 according to an embodiment of the present disclosure. FIG. 4a is a perspective view illustrating the state where a bus-bar assembly and a pressing member of a battery module 10 are coupled according to an embodiment of the present disclosure. FIG. 4b is a cross-sectional view illustrating the state where a bus-bar assembly and a pressing member of a battery module 10 are coupled when view from above according to an embodiment of the present disclosure. FIG. 5 is a cross-sectional view illustrating a process in which a bus-bar assembly and a pressing member of a battery module 10 are coupled to a battery cell according to an embodiment of the present disclosure.

Referring to FIGS. 1 to 5, the battery module 10 according to an embodiment of the present disclosure may include a battery cell 100, a module case 200, a bus-bar assembly 300, and a pressing member 400.

The battery cell 100 may include an electrode assembly, a cell case 110 that accommodates the electrode assembly, and an electrode lead 120 that is connected to the electrode assembly and extends outward from the cell case 110, thereby functioning as an electrode terminal.

The battery cell 100 may be a pouch-type secondary battery. Such a pouch-type secondary battery may be configured as a pouch in which a metal layer made of aluminum is interposed between polymer layers in the cell case 110.

Specifically, referring to FIG. 3, the battery cell 100 may include a storage portion R and a sealing portion S. The storage portion R may store an electrode assembly and an electrolyte. For example, the cell case 110 may have two pouches, for example, a left pouch and a right pouch, and the storage portion R may be positioned between the left pouch and the right pouch so that the edge of the storage portion R may be sealed. In this case, the storage portion R in at least a portion of the two pouches may have an inner space formed in a concave shape facing the electrode assembly, and the electrode assembly may be mounted in the inner space. Although the embodiment illustrated in FIG. 3 shows a double cup configuration in which the storage portion R is formed on both sides of the cell case 110, the present disclosure is not necessarily limited to the shape of the cell case 110. For example, the battery cell 100 may be configured in a single cup shape in which the storage portion R is formed only on one side of the cell case 110.

The sealing portion S may be configured to surround the storage portion R, and may be a portion in which the edges of the storage portion R are heat-fused. That is, the sealing portion S may be formed by sealing the edges of the storage portion R. In particular, the battery cell 100 may have four sides (edges) of the storage portion R. In this case, all of the four sides may be sealed, or only three sides may be sealed. A cell with four sealed sides may be called a four-sided sealing cell, and a cell with three sealed sides may be called a three-sided sealing cell. For example, in the implemented configuration illustrated in FIG. 3, the battery cell 100 is configured in an upright posture such that the front, rear, and top sides of the left pouch and the right pouch are sealed, and such that the bottom sides of the left pouch and the right pouch are folded, instead of being sealed, to be connected to each other. That is, the battery cell 100 is configured to have three sealed sides.

Each battery cell 100 may have an electrode lead 120. The electrode lead 120 may include a positive electrode lead and a negative electrode lead, and the positive electrode lead and the negative electrode lead may be provided to protrude from the same side (edge) or different sides of the battery cell 100. The cell in which the positive electrode lead and the negative electrode lead are located on the same side may be called a unidirectional cell, and the cell in which the positive electrode lead and the negative electrode lead are located on different sides, in particular, on the opposite sides, may be called a bidirectional cell.

The electrode lead 120 may be configured to extend to the front and/or rear of the sealing portion S of the battery cell 100. In this case, the sealing portion S from which the electrode lead 120 extends outward may be defined as a terrace portion T.

A plurality of battery cells 100 may be included in a battery module. In addition, the plurality of battery cells 100 may be stacked on each other in at least one direction. For example, the plurality of battery cells 100 may be arranged side by side in the left-right direction (X-axis direction) while standing in the vertical direction (Z-axis direction). In particular, in the case of a three-sided sealing cell, the respective battery cells 100 may be provided to stand such that the side not having the sealing portion S is located at the bottom. In this case, each battery cell 100 may have the sealing portions S directed in the front-back direction (Y-axis direction) and upward direction (+Z-axis direction), and the storage portion R directed in the left-right direction (X-axis direction).

Meanwhile, the present disclosure is not limited to a specific type or shape of battery cell 100, and various battery cells 100 known at the time of filing the present disclosure may be applied to implement the cell assembly of the present disclosure. In the present embodiment, although a pouch-type secondary battery with high energy density and easy stacking will be described as shown in the drawings, it is obvious that a cylindrical or prismatic secondary battery may also be applied to the battery cell 100.

The module case 200 may be configured to accommodate a plurality of battery cells 100 in the inner space, as shown in FIGS. 1 and 2. That is, the module case 200 may have an empty space formed therein, and a plurality of battery cells 100 may be accommodated in this inner space. For example, the module case 200 may have an upper plate, a lower plate, a left plate, a right plate, a front plate, and a rear plate to form the inner space. In addition, the plurality of battery cells 100 may be stored in the limited inner space. Here, the module case 200 may include a metal and/or plastic material.

In addition, at least some of the plates constituting the module case 200 may be configured in an integrated form. For example, referring to FIG. 2, the module case 200 may be configured as a mono frame in which the upper plate, the lower plate, the left plate, and the right plate are integrated with each other. In this case, the mono frame may have front and rear openings, and the front and rear plates, as end frames, may be coupled to the front and rear openings of the mono frame, thereby sealing the inner space of the mono frame. As another example, the module case 200 may be configured as a U-frame in which the lower plate, the left plate, and the right plate are integrated with each other. In this case, the upper plate, the front plate, and the rear plate may be coupled to the top, front, and rear ends of the U-frame. Meanwhile, the respective components of the module case 200 may be coupled by various fastening methods such as welding or bolting. However, the present disclosure is not limited to a specific material, shape, or coupling method of the module case 200.

According to an embodiment, although not shown in the drawing, at least one of the plates constituting the module case 200, for example, the upper plate, may include at least one venting area through which venting gas emitted from the battery cell 100 is discharged. For example, the venting area may be configured as one of either a venting hole or a preliminary fracture line. According to an implemented configuration of the present disclosure, the upper plate of the module case 200 may be provided with a venting area to induce directional venting to the top of the battery module 10.

The bus-bar assembly 300 may be configured to be electrically connected to the electrode lead 120. The bus-bar assembly 300 may be configured such that the electrode leads 120 of a plurality of battery cells 100 are connected to each other. More specifically, the bus-bar assembly 300 may be configured to support the electrode leads 120, facilitate the interconnection of the electrode leads 120, and enable sensing of voltage or the like from the electrode leads 120.

The bus-bar assembly 300 may be positioned on the side of a terrace portion T where the electrode lead 120 is positioned, among the sealing portions S of the battery cell 100. For example, the bus-bar assembly 300 may be positioned adjacent to the terrace portion T where the electrode lead 120 is positioned, among the sealing portions facing the front side (one side facing the -Y-axis direction) of the battery cell 100.

Referring to FIG. 4a, the pressing member 400 may be coupled to the bus-bar assembly 300. Here, "coupling" may indicate that the members are directly fixed and coupled to each other, or that the members are in (close) contact with each other. According to an embodiment, the pressing member 400 may be located inside the bus-bar assembly 300.

Referring to FIG. 4a, the pressing member 400 may be configured to extend in the vertical direction (Z-axis direction) along the terrace portion T. Here, the terrace portion T may indicate a sealing portion S that extends in the vertical direction at the front and/or rear of the battery cell 100. In order to prevent gas from venting through the terrace portion T, the pressing member 400 may be configured to extend in the vertical direction (Z-axis direction) corresponding to the shape of the terrace portion T and pressurize the entire length of the terrace portion T. For example, the vertical length of the pressing member 400 may be substantially the same as or greater than the vertical length of the terrace portion T. That is, the pressing member may pressurize the entire terrace portion T from the bottom to the top, thereby preventing the entire terrace portion T from being opened or ruptured.

According to the above-implemented configuration of the present disclosure, gas or flame may be completely blocked from venting through the terrace portion T, and the terrace portion T may be more reliably prevented from being ruptured due to the pressure of venting gas or flame.

A plurality of pressing members 400 may be provided. The plurality of pressing members 400 may be arranged to be spaced a predetermined distance apart from each other along the stacking direction of the battery cell 100. In this case, the terrace portion T of the battery cell 100 may be positioned between the spaced pressing members 400, as shown in part B of FIG. 5. That is, the electrode lead 120 of the battery cell 100 may be disposed between the spaced pressing members 400.

The pressing member 400 may be disposed outside the battery cell 100 and configured to pressurize at least a portion of the battery cell 100. Furthermore, as shown in part B of FIG. 5, the pressing member 400 may be configured to pressurize the sealing portion S, particularly the terrace portion T, of the battery cell 100. The pressing member 400 may be disposed in a space where the terrace portion T is disposed inside the module case 200. For example, the pressing member 400 may be disposed at the front area (e.g., in the -Y-axis direction) inside the module case 200 where the bus-bar assembly 300 is disposed. Referring to FIG. 3, the pressing member 400 may be provided on all of the sealing portions S on the front side of the battery cell 100. For example, the pressing member 400 may be positioned between the terrace portion T (that may be defined as a "first terrace portion") of the battery cell 100 (that may be defined as a "first battery cell") and the terrace portion T (that may be defined as a "second terrace portion") of the battery cell 100 (that may be defined as a "second battery cell") adjacent to the first battery cell.

The pressing member 400 may be disposed to be surrounded by the bus-bar assembly 300, the storage portion R, and the sealing portion S.

The pressing member 400 may be configured to pressurize the terrace portion T when the internal pressure of the battery cell 100 increases. In particular, the pressing member 400 may be configured to pressurize the terrace portion T such that the fusion state of the terrace portion T is not damaged or disrupted when the internal pressure of the battery cell 100 increases. That is, the pressing member 400 may pressurize the entirety or a portion of the terrace portion T, as well as the electrode leads 120, thereby preventing any part of the terrace portion T from being opened.

According to the above-implemented configuration of the present disclosure, the pressing member 400 coupled to the bus-bar assembly 300 is assembled to be interlocked with the battery cell 100, so that the assembly and detachment of the pressing member 400 may be easily performed, and the positional fixing force may be strengthened.

According to an embodiment, the pressing member 400 may be configured to be inserted into the space between at least some of the plurality of battery cells 100. Here, the space between the battery cells 100 may indicate the space between the terrace portions T of the plurality of battery cells 100 arranged side by side. That is, the pressing member 400 may be disposed between the bus-bar assembly 300 and the battery cell 100. The bus-bar assembly 300 and the pressing member 400 may be configured to be inserted between the battery cells 100 in the backward direction (+Y-axis direction).

According to the above embodiment of the present disclosure, the pressing member 400 may be configured to suppress the terrace portion T from being opened or separated. In particular, the sealing portion S (e.g., the terrace portion T) of the battery cell 100 is a fused portion that may have lower durability against high temperature, pressure, flame, or the like, compared to the storage portion R of the battery cell 100. However, according to the above embodiment of the present disclosure, since the terrace portion T of the battery cell 100 is protected by the pressing member 400, it is possible to prevent the terrace portion T from being affected by venting gas or flames discharged from other battery cells 100. Therefore, it is possible to effectively prevent propagation of thermal runaway between the battery cells 100 inside the battery module 10.

As shown in FIG. 2, the bus-bar assembly 300 may include a bus-bar terminal 310 and a bus-bar frame 320.

The bus-bar terminal 310 may be configured to electrically connect two or more electrode leads 120, or to be connected to one or more electrode leads 120 and transmit sensing information to a control unit such as a BMS (battery management system).

In addition, the bus-bar frame 320 may be made of an electrically insulating material, such as a plastic material. The bus-bar frame 320 may be configured such that the bus-bar terminal 310 is seated on and fixed to the same. Furthermore, the bus-bar frame 320 may have a slit formed thereon. In addition, the bus-bar terminal 310 may be attached to the outer surface of the bus-bar frame 320, for example, the front side (in the -Y-axis direction) thereof. In this case, the electrode lead 120 may pass through the slit of the bus-bar frame 320 and come into contact with the bus-bar terminal 310 located on the outer surface. In particular, a single electrode lead 120 or two or more electrode leads 120 stacked on each other may be fixed to the bus-bar terminal 310. In this case, the coupling between the electrode lead 120 and the bus-bar terminal 310 may be performed by laser welding or ultrasonic welding, but various other coupling methods may also be applied.

In this case, the pressing member 400 may be positioned on the inner side of the bus-bar frame 320, and the bus-bar terminal 310 may be positioned on the outer side of the bus-bar frame 320. That is, the pressing member 400 and the bus-bar terminal 310 may be disposed on the opposite sides of the bus-bar frame 320. In this case, the electrode lead 120 may pass through the slit 321 of the bus-bar frame 320 and come into contact with the bus-bar terminal 310 located on the outside.

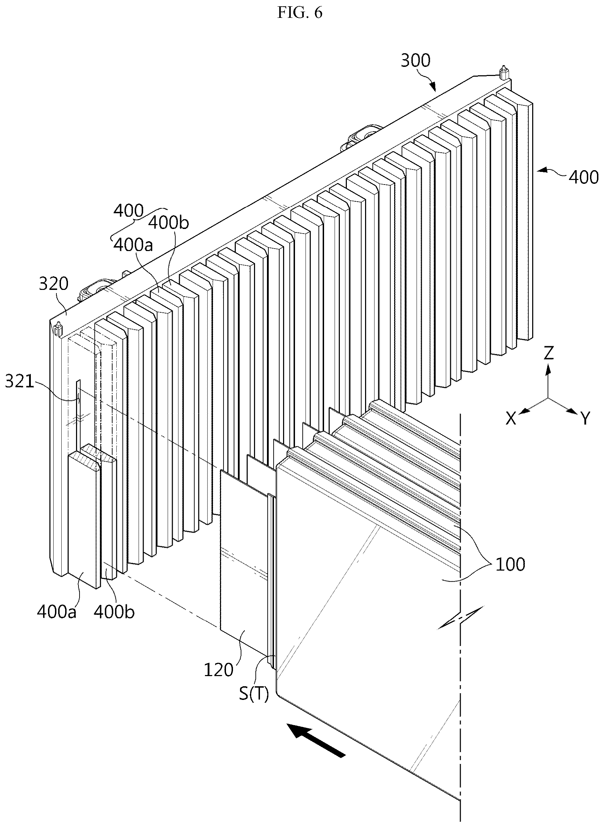

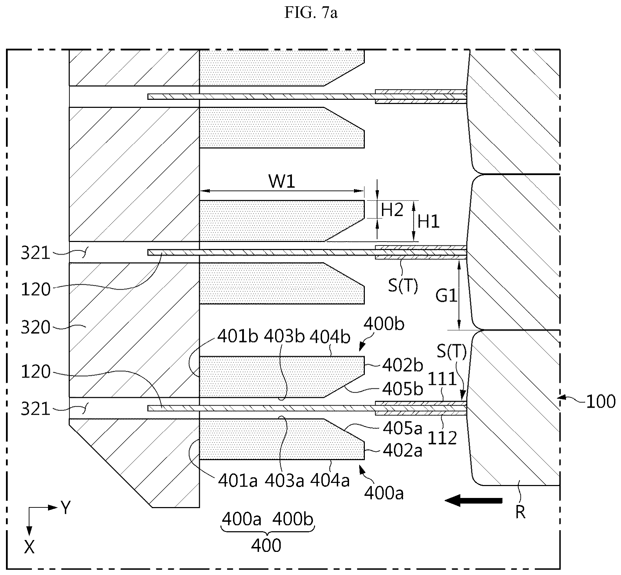

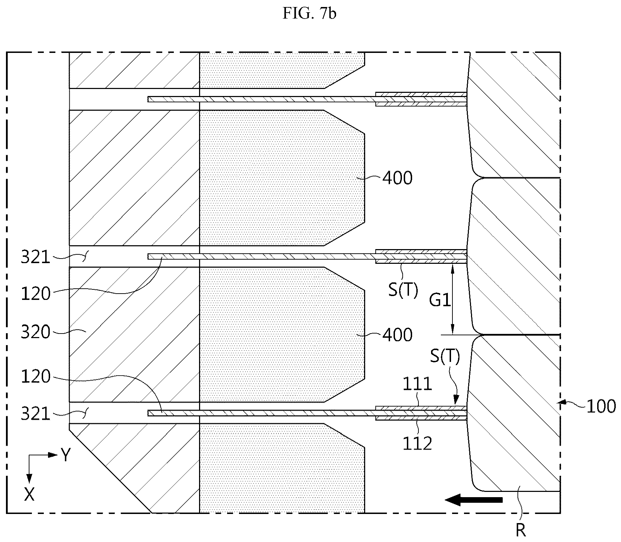

FIG. 6 is a perspective view illustrating the state where a bus-bar assembly and a pressing member are coupled to a battery cell according to an embodiment of the present disclosure. FIG. 7a is a cross-sectional view illustrating the state where a bus-bar assembly and a pressing member are coupled to a battery cell according to an embodiment of the present disclosure. FIG. 7b is a cross-sectional view illustrating the state where a bus-bar assembly and a pressing member are coupled to a battery cell according to an embodiment of the present disclosure.

According to an embodiment, the pressing member 400 and the bus-bar assembly 300 may be configured to be stored in the module case while being coupled to each other. That is, the pressing member 400 may be directly coupled to the bus-bar assembly 300. Specifically, the pressing member 400 may be coupled to the bus-bar frame 320.

The pressing member 400 may be in contact with the inner surface of the bus-bar frame 320. Referring to FIG. 4b, the pressing member 400 may be adhered to the inner surface of the bus-bar frame 320. In this case, an adhesive (not shown) may be further included between the pressing member 400 and the bus-bar frame 320. The adhesive may include, for example, an adhesive tape. As another example, a fastening recess may be formed in the bus-bar frame 320, and a fastening protrusion may be formed on one surface of the pressing member 400 so as to be inserted into the fastening recess. On the other hand, a fastening protrusion may be formed on the bus-bar frame 320, and a fastening recess may be formed on one surface of the pressing member 400 so that the fastening protrusion is inserted thereinto. However, the method of coupling and fixing the pressing member 400 and the bus-bar assembly 300 is not limited to the above embodiment, and may be designed in various ways.

According to the above embodiment of the present disclosure, the assembly of the battery module 10 may be improved. More specifically, the pressing member 400 is configured to be assembled simultaneously with the bus-bar assembly 300 while being combined with the bus-bar frame 320, thereby facilitating the assembly and reducing the assembly time. In addition, according to the present embodiment, the error in the assembly and arrangement of the pressing member 400 with respect to the battery cell 100 may be minimized.

According to an embodiment, in the case where a plurality of pressing members 400 are included, a slit 321 may be formed in the bus-bar frame 320 between adjacent pressing members 400. That is, the pressing member 400 may be adhered to one surface of the bus-bar frame 320 where the slit 321 is not formed. Therefore, the electrode lead 120 and/or the terrace portion T may be disposed to pass through the slit 321 between the adjacent pressing members 400.

According to an embodiment, the pressing member 400 may be configured to extend from the inner surface of the bus-bar frame 320 toward the inside of the battery module 10. For example, referring to the configuration in FIG. 7a, the pressing member 400 may be configured to protrude in the longitudinal direction (+Y-axis direction) from the inner surface of the bus-bar frame 320, and the respective pressing members 400 may be configured to face the storage portions R of the facing battery cell 100.

The pressing member 400 may be positioned to face at least a portion of the surface of the battery cell 100. In particular, the pressing member 400 may be positioned to face the sealing portion S of the battery cell 100. Furthermore, the pressing member 400 may be disposed to face the terrace portion T where the electrode lead 120 is positioned among the sealing portions S of the battery cell 100. The pressing member 400 may be positioned to face at least one surface of the terrace portion T on both surfaces (e.g., the left surface and the right surface) of the terrace portion T. That is, the surrounding space of the terrace portion T may be filled with the pressing members 400 in the module case 200.

According to the above-implemented configuration of the present disclosure, when the internal pressure increases due to an abnormal situation such as thermal runaway occurring in the battery cell 100, venting toward the terrace portion T may be prevented or suppressed.

In particular, there may be more space around the terrace portion T inside the module case 200 than in other areas of the battery cell 100, especially, the area where the storage portion R is located. Therefore, venting gas or flame emitted from the battery cell 100 may be easily concentrated thereon. Therefore, the terrace portion T may be more vulnerable to thermal chain reaction than other parts in the battery cell 100. However, according to the above-implemented configuration of the present disclosure, even if the internal pressure of the battery cell 100 increases, the terrace portion T is configured to be pressurized by the pressing member 400, so that venting toward the terrace portion T may be suppressed or blocked.

Therefore, according to the above-implemented configuration, the transfer of thermal damage from the battery cell 100 where an event occurs to the adjacent battery cells 100 may be reduced, thereby suppressing thermal propagation between the battery cells 100 and preventing or delaying the thermal runaway of the battery module 10. Therefore, according to the above aspect of the present disclosure, the safety and reliability of the battery module 10 may be improved.

In particular, the pressing member 400 may be provided only on the front terrace portion T, and the pressing member 400 may not be provided on the rear terrace portion T. Alternatively, the pressing member 400 may be disposed entirely on the front terrace portion T, and the pressing member 400 may be disposed partially on the rear terrace portion T.

In this case, directional venting (e.g., rear venting) may be implemented toward the rear of the battery module 10. According to this configuration of the present disclosure, a directional venting structure that induces venting in a desired direction may be easily implemented through appropriate arrangement of the pressing member 400. Furthermore, another battery module 10 or electrical connection configurations, such as a module terminal or a bus-bar between modules, for connection with another battery module 10 may be disposed on the front side of the battery module 10. However, if the venting to the front is blocked or suppressed as described in the above embodiment, it is possible to prevent or reduce high-temperature gas or flames from moving to another battery module 10 or the electrical connection configurations.

According to an embodiment, the adjacent pressing members 400 may be configured to pressurize the terrace portion T of the battery cell 100 from both sides.

For example, as shown in FIGS. 5 to 7a, the pressing member 400 may include a first pressing member 400a and a second pressing member 400b. The first pressing member 400a may be disposed to face a first surface (e.g., the first surface 111 in FIG. 3) of the terrace portion T. The second pressing member 400b may be disposed to face a second surface 112 (e.g., the second surface 112 in FIG. 3) of the terrace portion T on the opposite surface of the first surface 111. Here, the first surface 111 of the terrace portion T may be a surface facing the left direction (e.g., -X-axis direction), and the second surface 112 may be a surface facing the right direction (e.g., +X-axis direction).

That is, the first pressing member 400a and the second pressing member 400b may be positioned on both sides of the terrace portion T. For example, Referring to FIG. 5, the first pressing member 400a disposed on the left side of the terrace portion T may pressurize the terrace portion T to the right, and the second pressing member 400b disposed on the right side of the terrace portion T may pressurize the terrace portion T to the left.

According to the above-implemented configuration of the present disclosure, it is possible to prevent the terrace portion T from being opened toward both sides or moving in one direction by pressing on both sides of the terrace portion T. That is, when the terrace portion T is pressed from both sides as described above, since the terrace portion T is reliably pressurized, the sealing maintenance performance for the terrace portion T may be further improved.

The plurality of pressing members 400 may have substantially the same shape. That is, the plurality of pressing members 400 may have substantially the same size and shape, regardless of the arrangement positions, space shapes, or specifications. However, the first pressing member 400a and the second pressing member 400b may have a symmetrical shape based on the Y-axis. According to the above embodiment of the present disclosure, mass production or manufacturing of the pressing member 400 may be simplified and easy.

As illustrated in FIG. 7a, the pressing member 400 may include a front surface 401 facing the bus-bar frame 320 and in contact with the bus-bar frame 320, a rear surface 402 facing the battery cell 100, and side surfaces 403 and 404 connecting the front surface 401 and the rear surface 402 and extending in the longitudinal direction. In this case, the front surface 401 may include a front surface 401a of the first pressing member 400a and a front surface 401b of the second pressing member 400b in FIG. 7a. The rear surface 402 may include a rear surface 402a of the first pressing member 400a and a rear surface 402b of the second pressing member 400b in FIG. 7a. The side surfaces 403 and 404 may include side surfaces 403a and 404a of the first pressing member 400a and side surfaces 403b and 404b of the second pressing member 400b in FIG. 7a.

In this case, at least one surface of the pressing member 400 may include an inclined surface 405. At least one portion of the side surfaces 403 and 404 of the pressing member 400 may have an inclined surface 405 inclined at a predetermined angle. Specifically, among the side surfaces 403 and 404 of the pressing member 400, the side surface 403 facing the terrace portion T to be pressed may include an inclined surface 405. For example, a portion of the left side surface (a surface facing the -X-axis direction) 403a of the first pressing member 400a, which faces the terrace portion T, may include a first inclined surface 405a that is inclined at a specified angle. For example, a portion of the right side surface (a surface facing the +X-axis direction) 403b of the second pressing member 400b, which faces the terrace portion T, may include a second inclined surface 405b that is inclined at a specified angle. The inclined surfaces 405a and 405b of the first pressing member 400a and the second pressing member 400b may be disposed to face each other with the terrace portion T, which is to be pressurized, interposed therebetween. The first pressing member 400a and the second pressing member 400b may have a symmetrical shape with respect to the terrace portion T.

The inclined surface 405 may be configured to be inclined inward as it is closer to the rear on the side surface 403. Therefore, the distance between the first pressing member 400a and the second pressing member 400b may be configured to increase toward the back direction (+Y-axis direction) by the first inclined surface 405a and the second inclined surface 405b.

According to an embodiment, referring to FIG. 7a, the maximum thickness H1 of the pressing member 400 in the left-right direction (X-axis direction) may be less than a first distance G1 corresponding to the half of the length of the storage portion R of the battery cell 100 in the left-right direction (X-axis direction). Therefore, the rear surface of the pressing member 400 may be smaller than the front surface of the pressing member 400. The thickness H2 of the rear surface of the pressing member 400 in the left-right direction (X-axis direction), which faces the battery cell 100, may be configured to be less than the thickness H1 of the front surface 401 of the pressing member 400 in the left-right direction (X-axis direction).

According to the above embodiment of the present disclosure, when the pressing member 400 is assembled with the battery cell 100, the rear surface of the pressing member 400 may be inserted between the battery cells 100. In this embodiment, since the rear surface is relatively small, such insertion and/or assembly may be easy. That is, the terrace portion T of the battery cell 100 may be easily inserted between the first pressing member 400a and the second pressing member 400b. However, the pressing member 400 is not limited to the above embodiment, and may be variously designed and changed as long as it has a rear surface smaller than the front surface.

According to another embodiment of the present disclosure, referring to FIG. 7b, the first pressing member 400a and the second pressing member 400b in FIG. 7a may be formed integrally. That is, the pressing member 400 disposed to face a first surface (e.g., the first surface 111 in FIG. 7b) of the terrace portion T (that may be defined as a "first terrace portion") of the battery cell 100 (that may be defined as a "first battery cell") and the pressing member 400 disposed to face a second surface (e.g., the second surface 112 in FIG. 7b) of the terrace portion T (that may be defined as a "second terrace portion") of the battery cell 100 (that may be defined as a "second battery cell") adjacent to the first battery cell may be the same configuration. That is, the pressing member 400 may be positioned in close contact with the terrace portion T (that may be defined as a "first terrace portion") of the battery cell 100 (that may be defined as a "first battery cell") and the terrace portion T (that may be defined as a "second terrace portion") of the battery cell 100 (that may be defined as a "second battery cell") adjacent to the first battery cell.

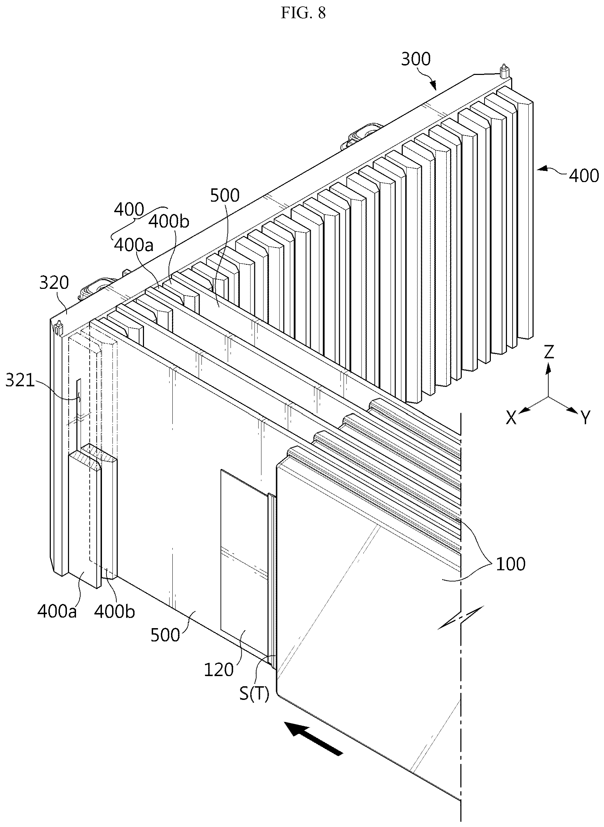

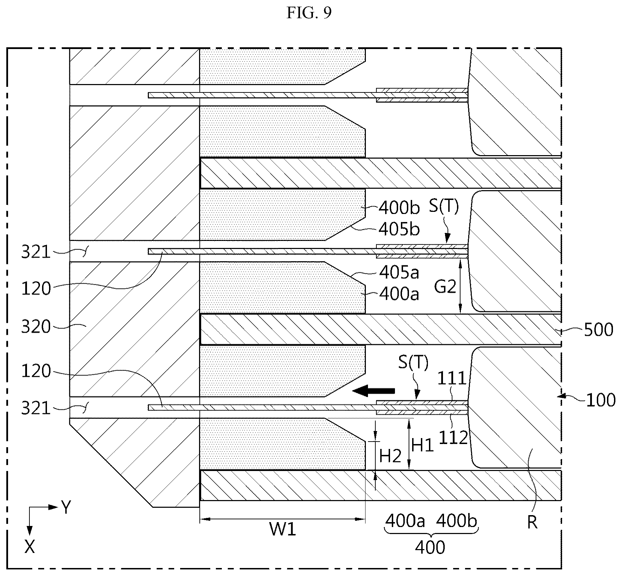

According to the above embodiment of the present disclosure, the same function may be performed without two pressing members 400 disposed between the first terrace portion T and the second terrace portion T, so that design and assembly may be facilitated. FIG. 8 is a perspective view illustrating the state where a bus-bar assembly and a pressing member are coupled to a battery cell on the front side of a battery module according to another embodiment of the present disclosure. FIG. 9 is a cross-sectional view illustrating the state where a bus-bar assembly and a pressing member are coupled to a battery cell on the front side of a battery module according to another embodiment of the present disclosure.

According to an embodiment, the battery module 10 according to the present disclosure may further include a barrier 500. The barrier 500 may be disposed between adjacent battery cells 100 or between the battery cell 100 and the module case 200. For example, the barrier 500 may be a plate arranged in the vertical direction. That is, in the state where the battery cells 100 are stacked in at least one direction, the barrier 500 may be interposed between the battery cells 100 of the stack. For example, referring to the configuration in FIG. 8, in the state where a plurality of battery cells 100 are stacked along the X-axis direction, the barrier 500 may be inserted between adjacent battery cells 100. One or more barriers 500 may be provided in each battery module 10. In particular, in the case where three or more battery cells 100 are included, multiple barriers 500 may be provided such that each barrier 500 is interposed between every pair of battery cells 100.

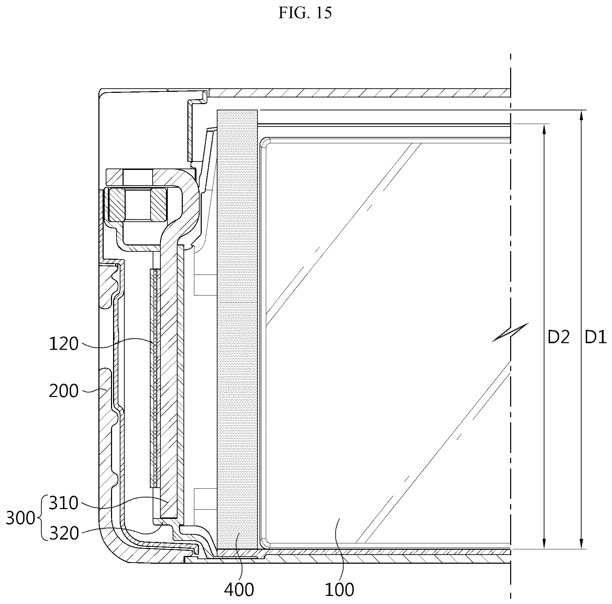

The barrier 500 may be configured to suppress heat, flame, pressure, impact, or the like from being transmitted between the battery cells 100. For example, the barrier 500 may be a thermal barrier configured to block heat or flame from being transmitted between the battery cells 100. Alternatively, the barrier 500 may be a compression pad configured to absorb pressure or shape change due to swelling between the battery cells 100. The barrier 500 according to the present disclosure may employ various components interposed between the battery cells 100 in a conventional battery module or battery pack (e.g., the battery pack 1 in FIG. 15).

In particular, the barrier 500 may be interposed between storage portions R of adjacent battery cells 100. That is, as described above, each battery cell 100 may have a storage portion R in its central portion, and the barrier 500 may be interposed between the storage portions R of the adjacent battery cells 100 so as to face the storage portions R of the battery cells 100.

According to an embodiment, referring to FIG. 9, the barrier 500 interposed between the storage portions R of adjacent battery cells 100 may have an end protruding therefrom and extending to the space between the sealing portions S, particularly the terrace portions T, of the adjacent battery cells 100. For example, the barrier 500 may be configured to protrude and extend toward the terrace portion T where the electrode lead 120 is located, among the sealing portions S of the battery cells 100.

Meanwhile, the barrier 500 may be configured such that at least one end is in contact with the bus-bar assembly 300. For example, referring to FIGS. 8 and 9, the front surface of the barrier 500 may be in direct contact with the inner surface of the bus-bar assembly 300 (at the rear). In particular, the barrier 500 may be in contact with the inner surface of the bus-bar frame 320 provided in the bus-bar assembly 300.

According to the above-implemented configuration of the present disclosure, the safety of the battery module 10 may be further improved. More specifically, if high-temperature venting gas or flame is emitted from the battery cell 100, it is possible to effectively block the venting gas or flame from affecting other nearby battery cells 100. In particular, the sealing portion S of the battery cell 100, which is a fused portion, may have lower durability against high temperature, pressure, flame, or the like, compared to the storage portion R of the battery cell 100.

However, according to the above aspect of the present disclosure, since the sealing portion S of the battery cell 100 is protected by the protruding portion of the barrier 500, it may be prevented from being affected by venting gas or flame emitted from other battery cells 100. Therefore, it is possible to effectively prevent propagation of thermal runaway between the battery cells 100 inside the battery module 10.

According to an embodiment, the pressing member 400 may be disposed to face one side of the barrier 500. For example, at least a portion of the side surfaces of the pressing member 400 may face one side of the barrier 500.

According to the above embodiment of the present disclosure, referring to FIG. 9, the barrier 500 may support the pressing member 400 so that the pressing member 400 may pressurize the terrace portion T. One surface (e.g., the side surface 404) of the pressing member 400 may be in contact with the barrier 500.

According to an embodiment, the pressing member 400 may be attached to the barrier 500. The battery module 10 may further include an adhesive member (not shown) disposed between the pressing member 400 and the barrier 500. That is, the pressing member 400 may be adhered to the barrier 500. In addition, the pressing member 400 may be fixed to the barrier in various other fastening methods.

According to the above-implemented configuration of the present disclosure, since the pressing member 400 is attached to the barrier 500, the fixing force of the pressing member 400 may be further improved.

According to an embodiment, referring to FIG. 9, the maximum thickness H1 of the pressing member 400 in the left-right direction (X-axis direction) may be less than a second distance G2 between the terrace portion T of the battery cell 100 and the barrier 500.

According to the above embodiment of the present disclosure, when the pressing member 400 is assembled with the battery cell 100, the rear surface of the pressing member 400 may be inserted between the battery cells 100 and the barrier 500. In this embodiment, since the rear surface is relatively small, such insertion and/or assembly may be easy. That is, the terrace portion T of the battery cell 100 may be easily inserted between the first pressing member 400a and the second pressing member 400b. However, the pressing member 400 is not limited to the above embodiment, and may be variously designed and changed as long as it has a rear surface smaller than the front surface.

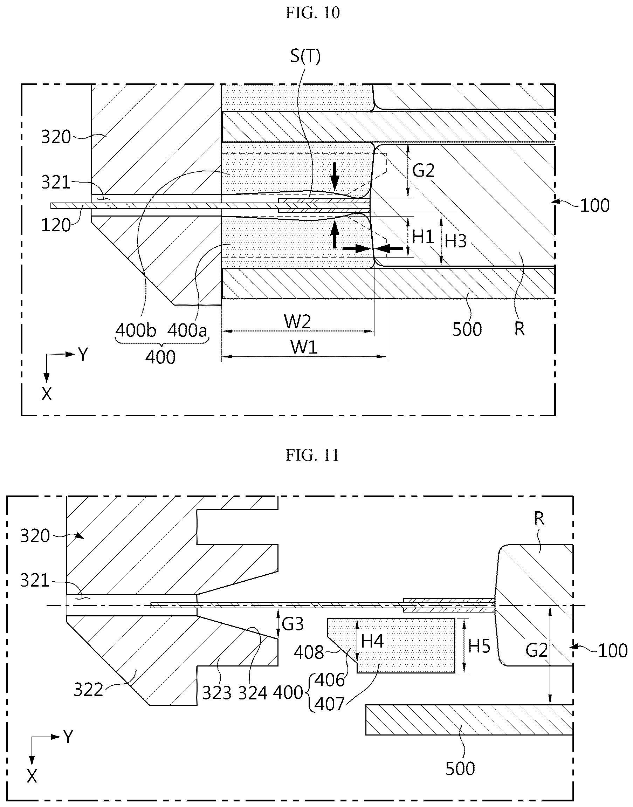

FIG. 10 is a cross-sectional view illustrating the state where a bus-bar assembly and a pressing member are coupled to a battery cell according to an embodiment of the present disclosure. In FIG. 10, for convenience of explanation, a state before pressing is shown with a dotted line for one pressing member 400a.

According to an embodiment, referring to the arrow directed in the Y-axis direction shown in FIG. 10, the pressing member 400 may be configured to pressurize the storage portion R of the battery cell 100 inward. In this case, the pressurization may be performed by pressure due to contact between the storage portion R and the pressing member 400. In addition, the storage portion R of the battery cell 100 may be configured to pressurize the pressing member 400 outward. That is, in the state where the shape of the pressing member 400 is deformed by the combination of the pressing member 400 and the battery cell 100, the pressing member 400 and the storage portion R may exchange pressure with each other.

According to the above embodiment of the present disclosure, the pressing member 400 may be configured to extend in the thickness direction (X-axis direction) while being pressed in the longitudinal direction (Y-axis direction).

Referring to FIG. 10, the width (length in the Y-axis direction) of the pressing member 400 before being pressed (before assembling the battery cell) may be configured to be equal to or greater than the distance between the bus-bar assembly 300 and the battery cell 100. The width (length in the Y-axis direction) of the pressing member 400 may be configured to be equal to or greater than the distance between the bus-bar assembly 300 and the battery cell 100. Specifically, the maximum width (length in the Y-axis direction) of the pressing member 400 is a first width W1. In the state where the bus-bar assembly 300, the pressing member 400, and the battery cell 100 are coupled, the distance between the inner surface of the bus-bar frame 320 and the storage portion R of the battery cell 100 may be a second length W2, which is less than the first width W1.

The pressing member 400 may be configured to be deformed in shape by the storage portion R of the battery cell 100 when assembled. That is, when the bus-bar assembly 300, the pressing member 400, and the battery cell 100 of the battery module 10 are assembled, the pressing member 400 may be compressed, so that its width may be reduced to match the distance between the bus-bar frame 320 and the storage portion R of the battery cell 100. That is, the first width W1 of the pressing member 400 may be changed into the second length W2.

In addition, as the width of the pressing member 400 is reduced, the thickness (length in the X-axis direction) of the pressing member 400 may increase. For example, referring to FIGS. 9 and 10, a third thickness H3, which is the thickness of the rear surface of the pressing member 400 in the assembled state of the battery cell, may increase to a thickness greater than the second thickness H2 corresponding to the thickness before pressurization. In this case, the third thickness H3 may be substantially equal to the second distance G2 between the barrier 500 and the terrace portion T. As described above, as the pressing member 400 and the battery cell 100 are assembled to each other, the width of the pressing member 400 decreases, and the thickness of the pressing member 400 increases, thereby pressurizing the terrace portion T.

According to the above-implemented configuration of the present disclosure, the assembly and safety of the battery module 10 may be further improved. In particular, before the pressing member 400 is assembled, the height of the pressing member 400 is less than the first distance G1 and the second distance G2, making assembly easier. In addition, after the pressing member 400 is assembled, the height of the pressing member 400 may increase to the first distance G1 and the second distance G2, thereby pressurizing the terrace portion T, so that gas or flame may be prevented from venting from the terrace portion T. In addition, the terrace portion T of another battery cell 100 may be prevented from being ruptured by the pressure of the venting gas or flame.

According to an embodiment, the pressing member 400 may include an elastic body. That is, the pressing member 400 may be formed of a material that is deformed when an external force is applied, and returns to its original shape when the force is removed. The pressing member 400 may include, for example, rubber, polyurethane, silicone, or the like. For example, the entire pressing member 400 may include an elastic material, or only a portion of the pressing member 400 may include an elastic material.

According to the above-implemented configuration of the present disclosure, the shape of the pressing member 400 disposed in a space between the battery cell 100 and the bus-bar assembly 300 may be deformed depending on the shape and size of the space. Therefore, it is not necessary to manufacture the pressing member 400 to conform to the shape of the space, which enables batch production, so that the manufacturing process is simplified and the manufacturing time may be shortened.

In addition, according to an embodiment, the pressing member 400 may include an insulating or heat-resistant material. For example, the pressing member may be made of or include an insulating or heat-resistant material. For example, the pressing member 400 may include a material having high insulating and/or heat-resistant (including fire-resistant) performance, such as at least one of plastic, rubber, silicon, aerogel, metal, and GFRP (glass fiber reinforced plastic). For example, the pressing member 400 may include a metal material having rigidity and heat resistance in order to physically or chemically prevent the terrace portion T from being ruptured.

According to this implemented configuration, even when high-temperature venting gas or flame is emitted from the battery cell, the pressing member may stably maintain structural rigidity.

According to the above-implemented configuration of the present disclosure, the heat or flame blocking performance of the terrace portion T may be more stably secured. More specifically, according to the above configuration, the venting gas or flame may be effectively blocked by the pressing member 400, having the insulation or heat resistance performance, from moving to other battery cells 100 in the space around the terrace portion T.

However, the material of the pressing member 400 is not limited to the above embodiment, and any material may be applied as long as it includes a material capable of being deformed, such as an elastic body, or exhibits predetermined insulation or heat resistance.

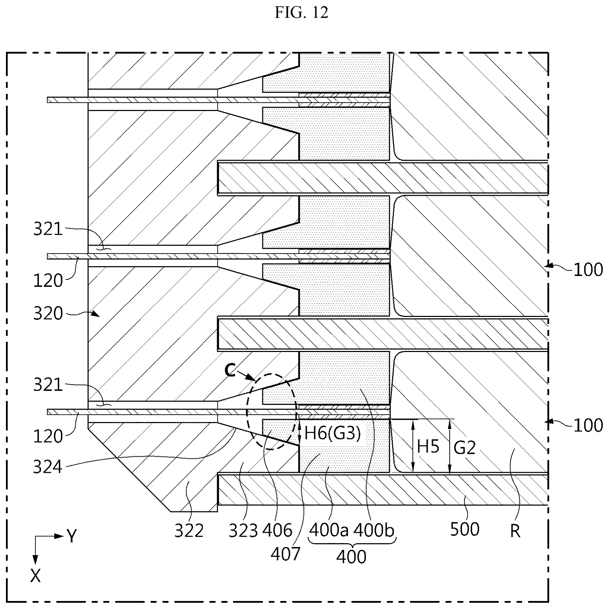

FIG. 11 is a cross-sectional view illustrating the state where a bus-bar assembly, a pressing member, and a battery cell are coupled according to another embodiment of the present disclosure. FIG. 12 is a cross-sectional view illustrating the state where a bus-bar assembly, a pressing member, and a battery cell are coupled according to another embodiment of the present disclosure.

The pressing member 400 may be directly coupled and/or fixed to the bus-bar assembly 300, or may be configured to face and/or come into contact with the bus-bar assembly 300, instead of being coupled thereto.

The shape of the pressing member 400 may be formed to match the shape of the empty space between the bus-bar assembly 300 and the battery cell. The shape of the pressing member 400 may be formed to substantially correspond to the shape of the empty space between the bus-bar assembly 300 and the battery cell 100. The shape of the pressing member 400 may be formed to substantially match the space among the bus-bar frame 320, the battery cell 100, and/or the barrier 500.

According to the above embodiment of the present disclosure, the empty space formed around the terrace portion T on the front side of the battery cell 100 is substantially filled with the pressing member 400, so that when thermal runaway occurs in the battery cell 100, venting toward the terrace portion T may be prevented or suppressed.

As shown in part C of FIG. 12, at least a portion of the pressing member may be inserted into the bus-bar frame. The pressing member 400 may be divided into a first portion 406 configured to be inserted into the bus-bar frame 320, and a second portion 407 configured not to be inserted into the bus-bar frame 320. For example, the first portion 406 may be positioned between the terrace portion T of the battery cell and the bus-bar frame 320. For example, the second portion 407 may be positioned between the barrier 500 and the terrace portion T.

According to an embodiment, the bus-bar frame 320 may include a body portion 322 formed to extend in the left-right direction (X-axis direction) and a protrusion 323 formed to extend inward (in the +Y-axis direction) from the body portion 322. The protrusion 323 may be formed at a position adjacent to a slit 321 formed in the body portion 322. The protrusion 323 may include a third inclined surface 324 formed by at least a portion of the side surface, on which the slit 321 is formed, being inclined at a specified angle. Specifically, the third inclined surface 324 may be formed on the side surface having the slit 321 formed and configured to face the terrace portion T. The third inclined surface 324 may be formed to be inclined in a direction away from the terrace portion T as it is closer to the rear. Therefore, the terrace portion T of the battery cell 100 and/or the electrode lead 120 may easily pass through the slit 321 along the third inclined surface 324. However, the protrusion 323 may be omitted as shown in FIG. 9, and the shape of the bus-bar frame 320 may be designed in various ways.

The first portion 406 may include a fourth inclined surface 408 corresponding to the third inclined surface 324. In this case, the inclined angle of the fourth inclined surface 408 and the inclined angle of the third inclined surface 324 may be different from each other. In addition, a third distance G3 between the third inclined surface 324 and the terrace portion T may be less than a fourth height H4 between the fourth inclined surface 408 and the side surface.

Therefore, referring to FIG. 12, when the first portion 406 is inserted between the protrusion 323 of the bus-bar frame 320 and the terrace portion T, the shape of the first portion 406 may be deformed. Specifically, the fourth height H4 between the fourth inclined surface 408 and the side surface may be reduced to a sixth height H6. The sixth height H6 is less than the fourth height H4 and may be substantially equal to the third distance G3 between the third inclined surface 324 and the terrace portion T. Therefore, the first portion 406 may be configured to pressurize the terrace portion T between the terrace portion T and the protrusion 323 of the bus-bar frame 320.

According to the above-implemented configuration of the present disclosure, the pressing member 400 may pressurize the terrace portion T when assembled, thereby blocking gas or flame from venting through the terrace portion T and preventing the terrace portion T from being ruptured by the pressure of the venting gas or flame.

The second portion 407 may have a shape corresponding to the space among the terrace portion T of the battery cell 100, the storage portion R, and the barrier 500. One surface of the second portion 407 may be in contact with the terrace portion T, and another surface may be in contact with the storage portion R. In addition, another surface may be in contact with the barrier 500. For example, it may be in a rectangular shape.

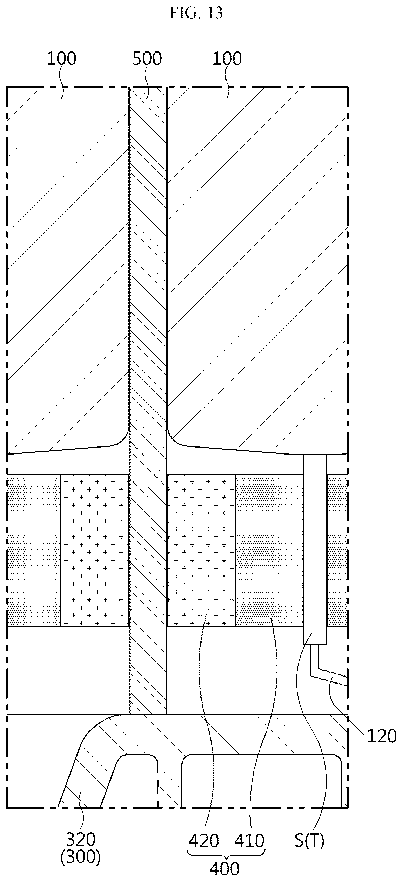

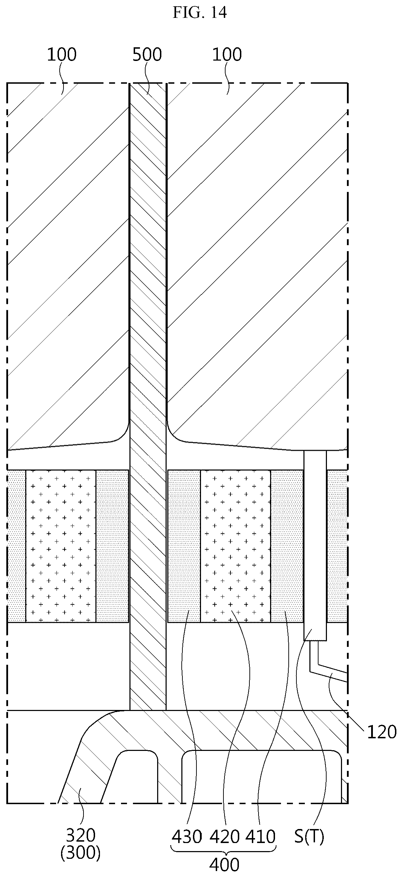

FIG. 13 is a cross-sectional view schematically illustrating a partial configuration of a battery module 10 including a pressing member 400 according to another embodiment of the present disclosure. FIG. 14 is a cross-sectional view schematically illustrating a partial configuration of a battery module 10 including a pressing member 400 according to another embodiment of the present disclosure.

According to an embodiment, the pressing member 400 may include two or more materials. The pressing member 400 may be comprised of a plurality of layers. The pressing member 400 may include a first pressing layer 410 including a first material, and a second pressing layer 420 including a second material different from the first material. The first pressing layer 410 may be disposed to face the terrace portion T, and the second pressing layer 420 may be disposed to face the barrier 500.

According to the above embodiment of the present disclosure, the pressing member 400 may have different materials between the layers, thereby providing a function of supporting an adjacent terrace portion T and a function of absorbing swelling occurring in the battery cell 100.

According to an embodiment, the pressing member 400 may include two or more materials having different strengths. For example, the first material and the second material may have different strengths. Here, strength may have substantially the same meaning as hardness, intensity, elasticity, or the like. For example, the first material and the second material may be different in elasticity. In this case, the first material of the first pressing layer 410 facing the terrace portion T may have a lower hardness than the second material of the second pressing layer 420.

According to the above-implemented configuration of the present disclosure, the first pressing layer 410 facing the terrace portion T is configured as a material having a lower hardness than that of the second pressing layer 420, so that, in the case of swelling in which the battery cell 100 expands to a certain level or more, it may be compressed to absorb or allow the swelling of the battery cell 100 to some extent. However, since the second pressing layer 420 has a higher hardness than the first pressing layer 410, swelling of the battery cell 100 may be restricted. Therefore, when a thermal event occurs in the battery cell 100, the terrace portion T of the battery cell 100 may be prevented from being completely opened.

According to another embodiment, referring to FIG. 14, the pressing member 400 may further include a third pressing layer 430 including a third material different from the second material. For example, the first pressing layer 410 and the third pressing layer 430 may be positioned to face adjacent terrace portions T or barriers 500, respectively. For example, the third material may have a different hardness from the second material. For example, the third material may have a different elasticity from the second material. For example, the first material and the third material may be different materials, or may be substantially the same material. According to an embodiment, the first pressing layer 410 and the third pressing layer 430 may have a lower hardness than the second pressing layer 420.

According to the above-implemented configuration of the present disclosure, it is possible to allow swelling in which the battery cell 100 expands to a certain level or more and prevent the terrace portion T of the battery cell 100 from being opened when a thermal event occurs in the battery cell 100

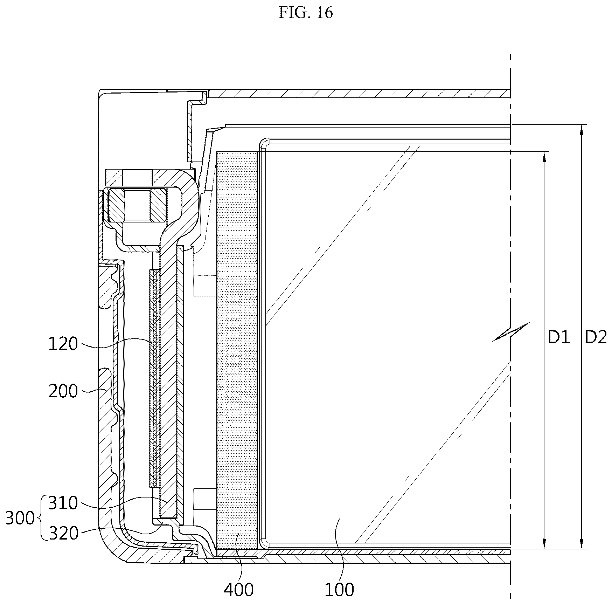

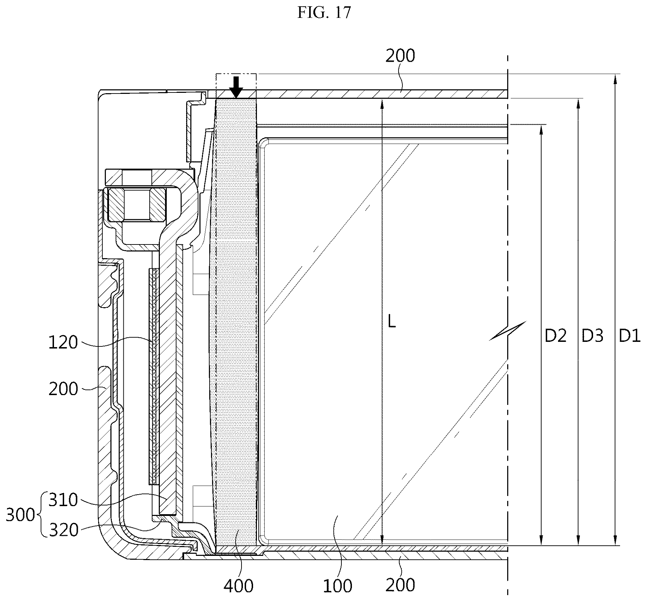

FIG. 15 is a cross-sectional view of a battery module 10 according to an embodiment of the present disclosure. FIG. 16 is a cross-sectional view of a battery module 10 according to another embodiment of the present disclosure. FIG. 17 is a cross-sectional view of a battery module 10 according to another embodiment of the present disclosure.

According to an embodiment, referring to FIG. 15, the vertical height D1 of the pressing member 400 may be greater than the vertical height D2 of the battery cell 100. According to the above-implemented configuration of the present disclosure, since entire area of the battery cell 100 may be pressurized in the vertical direction, it is possible to reliably prevent any part of the terrace portion T from being ruptured.

According to another embodiment, referring to FIG. 16, the vertical height D1 of the pressing member 400 may be less than the vertical height D2 of the battery cell 100. According to the above-implemented configuration of the present disclosure, the central portion of the terrace portion T, which is likely to rupture in the battery cell 100, may be intensively pressurized to effectively prevent rupture of the terrace portion T.

According to another embodiment, referring to FIG. 17, the vertical height D1 of the pressing member 400 may be configured to be greater than the distance L between the upper plate and the lower plate of the module case 200. That is, the pressing member 400 may be pressurized in the vertical direction by the upper plate and the lower plate of the module case 200. Accordingly, the vertical height of the pressing member 400 may be reduced from the height D1 thereof before being pressed to the height D3 thereof after being pressed. According to the above-implemented configuration of the present disclosure, the position of the pressing member 400 may be stably fixed by being pressed by the upper plate and the lower plate of the module case 200, and may not move by external impact. Therefore, even if an external impact or thermal runaway occurs, the position of the pressing member 400 may remain and pressurize the terrace portion T.

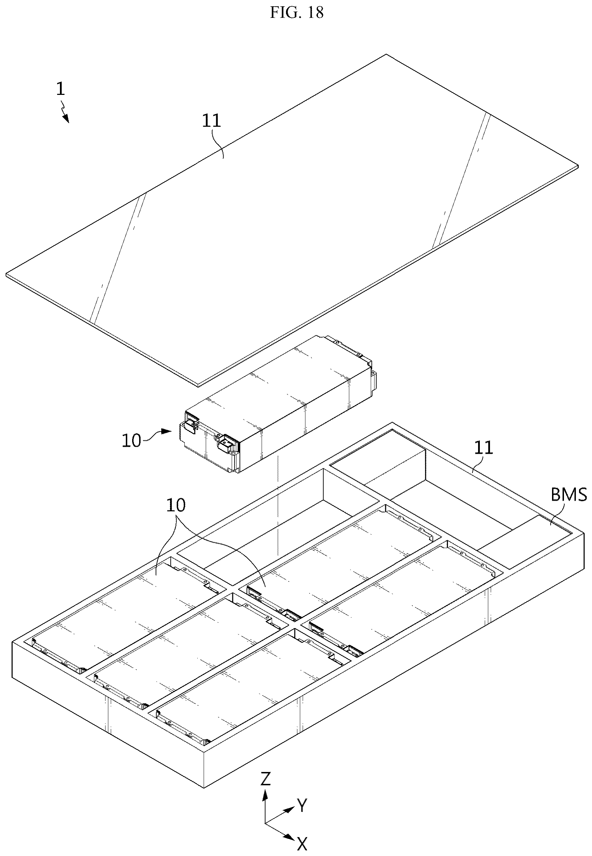

FIG. 18 is an exploded perspective view schematically illustrating a battery pack 1 including a battery module 10 according to an embodiment of the present disclosure.

Referring to FIG. 18, the battery pack 1 according to an embodiment of the present disclosure may include one or more battery modules 10 according to an embodiment of the present disclosure described above. In addition, the battery pack 1 according to the present disclosure may further include various other components, in addition to the battery module 10 according to the present disclosure. For example, the battery pack 1 according to the present disclosure may further include components of the battery pack 1 known at the time of filing the present disclosure, such as a BMS (Battery Management System), a bus-bar, a relay, a current sensor, or the like.

In addition, the battery pack 1 according to the present disclosure may further include a pack case 11, as indicated in FIG. 18. This pack case 11 may provide a space in which a battery module 10 according to the present disclosure may be stored. In particular, in the case where a plurality of battery modules 10 are included in the battery pack 1, the pack case 11 may be partitioned by cross-beams into spaces for storing the plurality of battery modules 10.

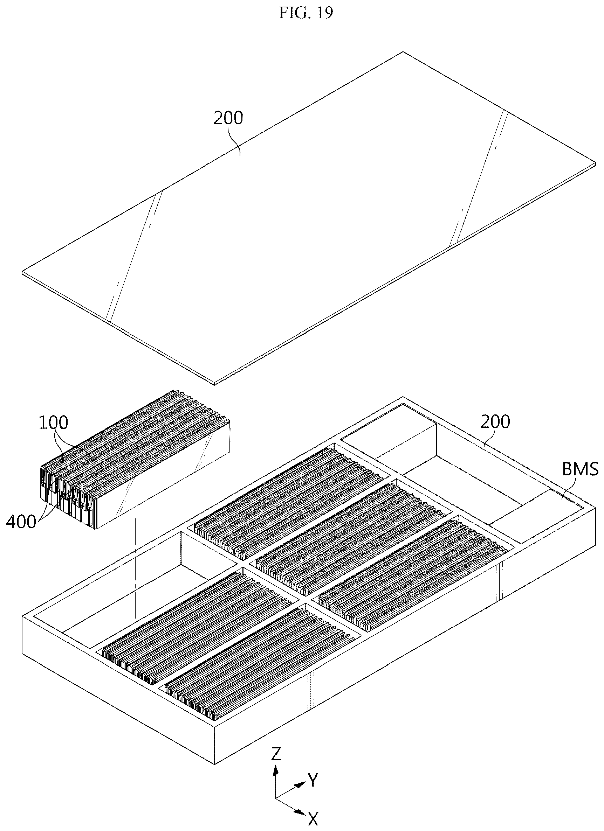

FIG. 19 is a perspective view schematically illustrating the configuration of a battery pack 1 according to another embodiment of the present disclosure.

Referring to FIG. 19, the battery pack 1 according to the present disclosure may include a battery module 10 according to the present disclosure, and may be configured such that the module case 200 of the battery module functions as a pack case, excluding the pack case. In this case, components of the battery pack, such as a BMS, a bus-bar, or a relay, may be disposed inside the module case 200. This type of battery pack is also called a cell-to-pack (CTP) type in which the battery cell 100 is directly stored in the pack case. These days, the active development of the CTP-type battery pack 1 is underway, and the present disclosure may also be applied to the CTP-type battery pack 1.

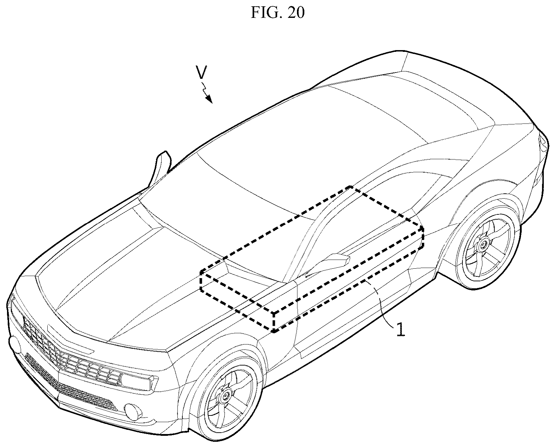

FIG. 20 is a schematically perspective view of a vehicle V including a battery pack 1 according to an embodiment of the present disclosure.

Referring to FIG. 20, the vehicle V according to an embodiment of the present disclosure may include one or more battery packs 1 according to an embodiment of the present disclosure or battery modules 10 according to an embodiment of the present disclosure. The vehicle V according to the present disclosure may be, for example, an electric vehicle, a hybrid vehicle, or a plug-in hybrid vehicle. The vehicle V includes a four-wheel vehicle and a two-wheel vehicle. The vehicle V may be operated by power supplied from the battery pack 1 or battery module 10 according to an embodiment of the present disclosure.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A battery module comprising:
a plurality of battery cells having a storage portion and a sealing portion, respectively, and configured to be stacked on each other;
a module case configured to store the plurality of battery cells in an inner space;
a bus-bar assembly located on a side of a terrace portion where an electrode lead is located, among the sealing portions of the battery cells, and electrically connected to the electrode lead; and
a pressing member coupled to the bus-bar assembly and configured to pressurize the terrace portion when internal pressure of the battery cell increases.

2. The battery module according to claim 1,
wherein the pressing member is configured to be inserted into spaces between at least some of the plurality of battery cells.

3. The battery module according to claim 1,
wherein the bus-bar assembly comprises a bus-bar terminal and a bus-bar frame,
wherein the pressing member is located on the inner side of the bus-bar frame, and
wherein the bus-bar terminal is located on the outer side of the bus-bar frame.

4. The battery module according to claim 1,
wherein the pressing member and the bus-bar assembly are stored in the module case while being coupled to each other.

5. The battery module according to claim 1,
wherein adjacent pressing members are configured to pressurize the terrace portion of the battery cell from both sides.

6. The battery module according to claim 1,
wherein the pressing member is configured to pressurize the storage portion of the battery cell inward.

7. The battery module according to claim 6,
wherein a horizontal length of the pressing member is configured to be equal to or greater than a distance between the bus-bar assembly and the battery cell.

8. The battery module according to claim 6,
wherein the pressing member is configured to be deformed in shape by the storage portion of the battery cell during assembly.

9. The battery module according to claim 1,
wherein a shape of the pressing member is formed to match a shape of an empty space between the bus-bar assembly and the battery cell.

10. The battery module according to claim 1,
wherein the pressing member comprises an elastic body.

11. The battery module according to claim 1,
wherein the pressing member comprises two or more different materials.

12. The battery module according to claim 1,
wherein the pressing member comprises two or more materials with different strengths from each other.

13. The battery module according to claim 1,
wherein the pressing member comprises an insulating or heat-resistant material.

14. The battery module according to claim 1,
wherein the pressing member is disposed to be surrounded by the bus-bar assembly, the storage portion, and the sealing portion.

15. The battery module according to claim 1,
wherein a vertical height of the pressing member is greater than a vertical height of the battery cell.

16. The battery module according to claim 1,
wherein a vertical height of the pressing member is configured to be greater than a distance between an upper plate and a lower plate of the module case, and
wherein the pressing member is configured to be pressurized in a vertical direction by the upper plate and the lower plate.

17. A battery pack comprising a battery module according to any one of claims 1 to 16.

18. A vehicle comprising a battery module according to any one of claims 1 to 16.
